# EUROPÄISCHE PATENTSCHRIFT

(11) **EP 1 095 494 B1**
(45) Veröffentlichungstag und Bekanntmachung des Hinweises auf die Patenterteilung: **19.04.2006**
(21) Anmeldenummer: 99944267.6
(22) Anmeldetag: 02.07.1999
(51) Int. Cl.: H04M 1/247

(54) **TELEKOMMUNIKATIONSENDGERÄT**
TELECOMMUNICATION TERMINAL
TERMINAL DE TELECOMMUNICATION

(30) Priorität: 08.07.1998 DE 19830565
(43) Veröffentlichungstag der Anmeldung: 02.05.2001
(73) Patentinhaber: SIEMENS AKTIENGESELLSCHAFT, 80333 München (DE)
(72) Erfinder: RÜTHER, Ralf, D-48653 Coesfeld (DE)
(86) Internationale Anmeldenummer: PCT/DE1999/002040
(87) Internationale Veröffentlichungsnummer: WO 2000/003551

(56) Entgegenhaltungen:
- EP-A- 0 792 056
- WO-A-97/29582
- DE-A- 19 600 555
- GB-A- 2 293 951
- US-A- 5 774 540

## Beschreibung

Die Erfindung bezieht sich auf ein Telekommunikationsendgerät mit einem Sende/Empfangsteil, zumindest einem Mikroprozessor, einer Eingabeeinrichtung sowie einer optischen und/oder akustischen Anzeige, wobei der Mikroprozessor eine Menüstruktur mit Optionen aufweist, welche seitens des Benutzers über die Eingabe aufgerufen und/oder geändert werden können.

Bei modernen Telekommunikationsendgeräten dieser Art sind, insbesondere bei Mobilfunkgeräten, wie beispielsweise solchen nach dem GSM-System, umfangreiche und weit verzweigte Menüstrukturen vorgesehen, damit der Benutzer aus einer Vielzahl von Menüs und Untermenüs die entsprechenden Optionen auswählen kann. Beispiele für solche Optionen sind die Wahl der Ruftonlautstärke, eine Telefonstärke, eine Änderung von Pin-Codes, Rufnummernanzeige, Netzauswahl, Gesprächszähler, Gebührenzähler, etc. Aufgrund der vielen möglichen Optionen sind nicht nur die Bedienungshandbücher für moderne Funktelefone äußerst umfangreich geworden, sondern es ist für den durchschnittlichen Benutzer äußerst schwierig, eine gewünschte Option auf raschem Wege aufzufinden, wobei immer die Gefahr besteht, daß bei nicht systematischem Vorgehen oft unbeabsichtigte, schwerwiegende Änderungen an Einstellungen vorgenommen werden, welche der Benutzer kaum mehr rückgängig machen kann.

Aus der Bedienungsanleidung "Ihr E-Plus Handy PT-11 stellt sich vor!"; E-Plus Mobilfunk GmbH, 40476 Düsseldorf, 9350425 Issue 3, Seiten 35, 48, 62 und 63 ist ein tragbares Mobilfunkgerät bekannt, bei dem einzelnen Optionen einer Menüstruktur Ziffern zugeordnet werden. Der Aufruf der Optionen kann dabei entweder über Menü- bzw. Auswahltasten oder über das Tastenfeld durch direkte Eingabe der Ziffern erfolgen.

Es ist eine Aufgabe der Erfindung, dem Benutzer eines Telekommunikationsendgerätes einen raschen Zugang zu gewünschten Optionen zu ermöglichen, ohne das diesem die genaue Menüstruktur bekannt sein muß.

Diese Aufgabe wird ausgehend von einem Telekommunikationsendgerät der eingangs genannten Art erfindungsgemäß dadurch gelöst, daß eine Speicherliste mit Schlagworten eingerichtet und jedes Schlagwort einer Option zugeordnet ist, wobei die Schlagwörter der Speicherleiste über die Eingabe auswählbar sind, und die Option nach Auswahl des Schlagwortes durch dessen Bestätigung unmittelbar aufgerufen und/oder geändert werden kann.

Dank der Erfindung ist der Benutzer nicht mehr darauf angewiesen, durch langes Blättern mit Hilfe von Soft-Keys die gewünschten Menüebenen oder Unterebenen zu erreichen, sondern er muß lediglich ein ausgewähltes Stichwort bestätigen, um zu der zugeordneten Option zu gelangen. Die Benutzerführung wird dadurch wesentlich vereinfacht.

Es ist vorteilhaft, wenn die Schlagwörter der Speicherliste über alphanumerische Eingabetasten und/oder Scrolltasten auswählbar sind. Dabei wird meist eine Kombination dieser Tasten angewendet werden, z.B. wenn unter einem Anfangsbuchstaben mehrere Schlagwörter vorliegen.

Eine weitere zweckmäßige Variante zeichnet sich dadurch aus, daß zumindest Teile der Speicherliste über die Eingabe frei editierbar sind. Dadurch kann der Benutzer den Menüoptionen Namen seiner Wahl geben, um damit bei neuerlicher Suche eines Schlagwortes dieses schneller zu finden, da es ihm z.B. memotechnisch besser zusagt als die werkmäßige Namensgebung.

Die Erfindung ist besonders vorteilhaft, falls das Endgerät ein DECT- und/oder ein GSM-Handgerät ist.

Die Erfindung samt weiterer Vorteile ist im folgenden anhand eines Ausführungsbeispiels und unter Bezugnahme auf die Zeichnung näher erläutert. In der Zeichnung zeigen
Fig. 1 eine zur Erläuterung eines Ausführungsbeispiels der Erfindung verwendete Menüstruktur, jedoch nur auszugsweise,
Fig. 2 ein vereinfachtes Blockschaltbild eines Handys nach der Erfindung und die
Fig. 3 bis 7 die Anzeige bzw. Tastenbetätigung an einem Handy bei der Menüführung gemäß der Erfindung.

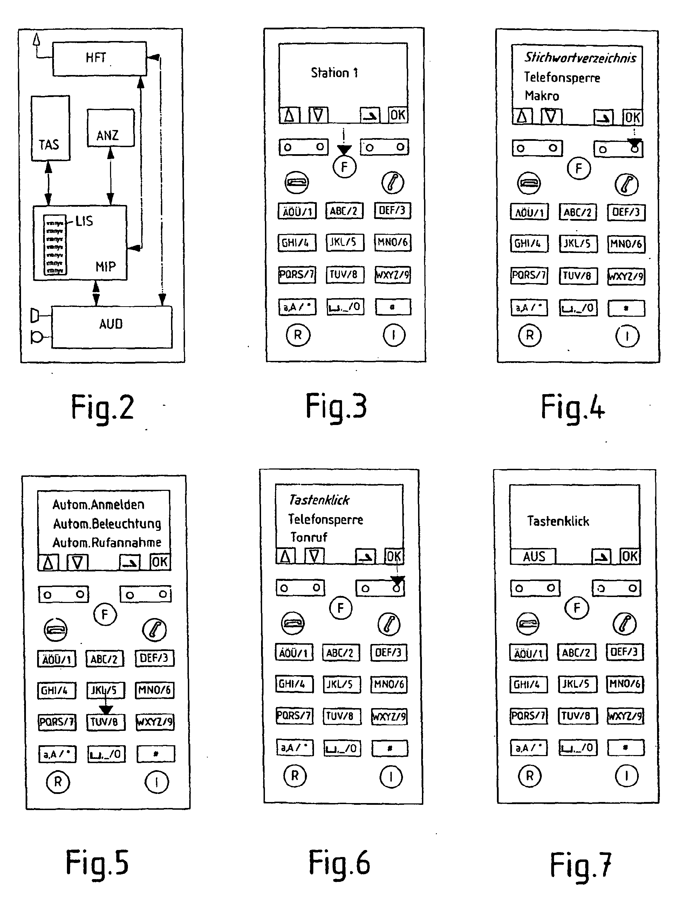

Die Erfindung, welche sich ganz allgemein auf ein Telekommunikationsendgerät bezieht, ist am Beispiel eines Mobilfunkgerätes, nämlich eines Schnurlostelefons, erläutert, welches nach dem DECT-Standard arbeitet. Es besitzt gemäß Fig. 2 neben einem Sende-Empfangsteil HFT zumindest einen Audioteil AUD, eine Anzeige ANZ, z.B. ein LCD-Display sowie eine Tasteneingabe TAS mit beleuchtbaren Tasten.

Dem Mikroprozessor MIP kommen in bekannter Weise verschiedene Steuerungs- und Verarbeitungsfunktionen zu, und in ihm ist auch eine Menüstruktur mit einer meist großen Anzahl von Optionen implementiert, welche einstellbare Geräteeigenschaften, Dienste des Netzbetreibers, etc. betreffen. Beispielsweise seien hier angeführt die Wahl der Ruftonmelodie, der Ruftonlautstärke, Displaybeleuchtung, Tastenklick, Nachrichteneinstellungen, Änderung von PIN-Codes, Gesprächszähler, Sprachauswahl, Netzauswahl, etc. Bei handelsüblichen GSM-Handys oder GSM-Schnurlosgeräten kann die Anzahl solcher Optionen ohne weiteres 50 bis 100 betragen. Die Optionen sind in einer Menüstruktur gegliedert, wobei neben Hauptmenüs nach einer Baumstruktur auch Untermenüs vorgesehen sind.

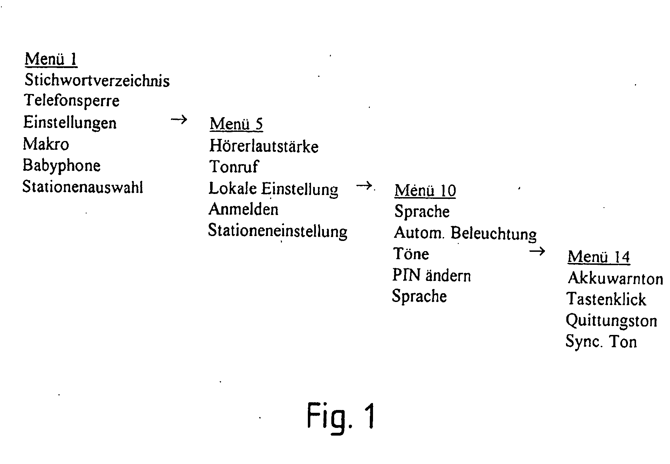

Gemäß der Erfindung ist nun eine Speicherliste LIS mit Stichworten eingerichtet, wobei jeder Option ein Stichwort zugeordnet ist. Ein Ausschnitt aus einer Menüstruktur mit z.B. 15 Menüs und über 70 Optionen könnte wie in Fig. 1 dargestellt aussehen.

Solche Menüstrukturen sind auch bei sogenannten "Handys", z.B. GSM-Geräten üblich, ebenso bei Mehrsystemgeräten, z.B. "Dual-Mode-Handys", so daß sich die Erfindung bei all diesen Geräten als besonders vorteilhaft darstellt.

Falls der Benutzer beispielsweise die Option "Tastenklick" ändern möchte, wird er bei herkömmlichen Geräten durch 2-maliges Drücken der Scroll-Taste ∇ zu "Einstellungen" gelangen. Durch Drücken der Taste "OK" gelangt er in das Menü 5, hier durch 2-maliges Drücken der Scroll-Taste ∇ von "Hörerlautstärke" zu "Lokale Einstellung", durch Drücken der "OK"-Taste in das Menü 10 und hier durch 2-maliges Drücken der Scroll-Taste ∇ von "Sprache" zu "Töne". Nach Drücken der Taste "OK" befindet sich der Benutzer im Menü 14, und er gelangt nach 1-maligem Drücken der Scroll-Taste ∇ von der ersten Option dieses Menüs zu der folgenden, der Option "Tastenklick".

Bei einem Endgerät nach der Erfindung drückt der Benutzer, ausgehend von der Situation nach Fig. 3, die Menütaste "F", um in das Hauptmenü zu gelangen (Menü 1). Nun drückt er (Fig. 4) die "OK"-Taste für die erste Position des Hauptmenüs "Stichwortverzeichnis" und dann kann der Benutzer die Taste "TUV/8" drücken (Fig. 5), um zu dem Buchstaben "T" zu gelangen, und es bietet sich die Anzeige gemäß Fig. 6. Man kann sich alternativ im Stichwortverzeichnis auch mit Hilfe der Scroll-Tasten "∇" und "Δ" bewegen, um zu dem gewünschten Stichwort, hier "Tastenklick" zu gelangen.

Das Stichwort "Tastenklick" steht nun gemäß Fig. 6 an erster Stelle und/oder wird besonders hervorgehoben, z.B. durch Blinken. Der Benutzer muß nun nichts anderes veranlassen, als die Option "Tastenklick" zu bestätigen, z.B. durch Drücken der "OK"-Taste, worauf der Mikroprozessor direkt in diese Position der Menüs 14 führt, wie in Fig. 7 dargestellt. Der Benutzer kann nun "AUS" bestätigen, wobei er - verglichen mit herkömmlichen Geräten - nur einen Bruchteil der Zeit benötigt hat.

## Patentansprüche

1. Telekommunikationsendgerät mit zumindest einem Mikroprozessor (MIP), einer Eingabeeinrichtung (TAS) sowie einer optischen und/oder akustischen Anzeige (ANZ), wobei der Mikroprozessor eine Menüstruktur mit Optionen aufweist, welche seitens des Benutzers über die Eingabe aufgerufen und/oder geändert werden können,
**dadurch gekennzeichnet,**
**daß** eine Speicherliste (LIS) mit Schlagworten eingerichtet und jedes Schlagwort einer Option zugeordnet ist, wobei die Schlagwörter der Speicherliste über die Eingabe (TAS) auswählbar sind, und die Option nach Auswahl des Schlagwortes durch dessen Bestätigung unmittelbar aufgerufen und/oder geändert werden kann.

2. Endgerät nach Anspruch 1,
**dadurch gekennzeichnet, daß** die Schlagwörter der Speicherliste (LIS) über alphanumerische Eingabetasten und/oder Scroll-Tasten auswählbar sind.

3. Endgerät nach Anspruch 1 oder 2,
**dadurch gekennzeichnet, daß** zumindest Teile der Speicherliste (LIS) über die Eingabe (TAS) frei editierbar sind.

4. Endgerät nach einem der Ansprüche 1 bis 3,
**dadurch gekennzeichnet, daß** es ein DECT- und/oder ein GSM-Handgerät ist.

## Claims

1. Telecommunication terminal with at least one microprocessor (MIP), an input mechanism (TAS) and an optical and/or acoustic display (ANZ), the microprocessor having a menu structure with options, which can be called up and/or modified by the user via the input,
**characterised in that**
a stored list (LIS) containing keywords is set up and every keyword is assigned to an option, with the possibility of selecting the keywords in the stored list via the input (TAS) and the possibility of directly calling up and/or modifying the option after selecting the keyword by confirming said keyword.

2. Terminal according to claim 1,
**characterised in that** the keywords in the stored list (LIS) can be selected via alphanumeric input keys and/or scroll keys.

3. Terminal according to claim 1 or 2,
**characterised in that** at least some parts of the stored list (LIS) can be edited freely via the input (TAS).

4. Terminal according to one of claims 1 to 3,
**characterised in that** it is a DECT and/or a GSM handset.

## Revendications

1. Terminal de télécommunication avec au moins un microprocesseur (MIP), un dispositif de saisie (TAS) ainsi qu'un affichage optique et/ou acoustique (ANZ), le microprocesseur comportant une structure de menu avec des options qui peuvent être appelées et/ou modifiées côté utilisateur via la saisie,
**caractérisé par**
l'aménagement d'une liste de mémoire (LIS) avec des mots clés et l'affectation de chaque mot clé à une option, les mots clés de la liste de mémoire étant sélectionnables via la saisie (TAS) et l'option pouvant être appelée et/ou modifiée directement après la sélection du mot clé par confirmation de celui-ci.

2. Terminal selon la revendication 1,
**caractérisé en ce que** les mots clés de la liste de mémoire (LIS) sont sélectionnables par l'intermédiaire de touches de saisie alphanumériques et/ou de touches de défilement.

3. Terminal selon la revendication 1 ou 2,
**caractérisé en ce qu'**au moins des parties de la liste de mémoire (LIS) peuvent être éditées librement via la saisie (TAS).

4. Terminal selon l'une des revendications 1 à 3,
**caractérisé en ce qu'**il est un portable DECT et/ou GSM.
